# EUROPÄISCHE PATENTSCHRIFT

(11) **EP 0 761 518 B1**
(45) Veröffentlichungstag und Bekanntmachung des Hinweises auf die Patenterteilung: **27.10.1999**
(21) Anmeldenummer: 96110960.0
(22) Anmeldetag: 06.07.1996
(51) Int. Cl.: B60T 11/04

(54) **Einstellvorrichtung mit selbsttätigem Längenausgleich für einen Betätigungszug**
Device for automatic length adjustment for an actuating cable
Dispositif pour le rattrapage automatique de la longeur d'un câble de commande

(30) Priorität: 10.08.1995 DE 19529459; 15.12.1995 DE 19546931
(43) Veröffentlichungstag der Anmeldung: 12.03.1997
(73) Patentinhaber: KÜSTER & Co. GmbH, 35630 Ehringshausen (DE)
(72) Erfinder: Krug, Michael, 35614 Asslar (DE)
(74) Vertreter: Müller, Eckhard, Dr.

(56) Entgegenhaltungen:
- EP-A- 0 184 092
- DE-A- 3 820 978
- FR-A- 2 710 302

## Beschreibung

Die Erfindung betrifft eine Einstellvorrichtung mit selbsttätigem Längenausgleich für einen Betätigungszug, insbesondere für einen Seilzug zur Betätigung von Bremsbacken eines Fahrzeuges mittels eines Betätigungselements, wie einem Handbremshebel, einer Fußfeststellbremse o. dgl.

Bei derartigen Betätigungszügen tritt im allgemeinen das Problem auf, daß sie fertigungsbedingt nicht exakt gleich lang ausgebildet sind, so daß für eine genaue Einstellung ihrer Länge, insbesondere bei dem Einsatz als Betätigungszug für Bremsen, eine Ersteinstellung vorgenommen werden muß. Auch aufgrund der Längung der Betätigungszüge während des Betriebes und aufgrund von bspw. Spiel der Bremsen selbst bedarf es auch einer Einstellung der Betätigungszüge während der Nutzungsdauer.

Es sind bereits verschiedene Längeneinstellvorrichtungen, insbesondere für Handbremszüge bekannt (siehe beispielsweise FR-A-2 710 302, aus der eine Einstellvorrichtung mit den Merkmalen des Oberbegriffs des Anspruchs 1 bekannt ist, und DE-A-3 820 978), welche üblicherweise jeweils in einem Betätigungszug bzw. Seilzug für jeweils eine Bremsbacke eingesetzt sind. Diese bekannten Einstellvorrichtungen sind daher recht aufwendig und auch kostspielig. Auch steht häufig nicht der erforderliche Bauraum zur Unterbringung derartiger Einstellvorrichtung zur Verfügung.

Demgegenüber liegt der Erfindung die Aufgabe zugrunde, eine Einstellvorrichtung mit selbsttätigem Längenausgleich der eingangs genannten Art, insbesondere für eine Handbremse von Fahrzeugen anzugeben, welche bei einer einfachen Herstellung und Montage einen selbsttätigen Längenausgleich der Betätigungszüge ermöglicht.

Diese Aufgabe wird nach der Erfindung bei der Einstellvorrichtung mit den eingangs genannten Merkmalen dadurch gelöst, daß die Einstellvorrichtung eine gehäuseartige Aufnahme mit zwei schwenkbar gelagerten, durch Federelemente vorgespannten Rastelementen aufweist, die jeweils mit einem Betätigungszug, insbesondere Seilzug verbindbar sind, und mit einem in der Aufnahme verschiebbar geführten Sperrstück, welches bei einer Betätigung eines Betätigungszuges bzw. Seilzuges von einer die Rastsegmente entsperrenden Position in eine die Rastsegmente sperrende Position überführbar ist. Hierdurch wird in vorteilhafter Weise gewährleistet, daß bei einer Nichtbetätigung des Betätigungszuges die Rastsegmente durch das Sperrstück nicht gesperrt sind, so daß aufgrund der Vorspannung der Rastsegmente ein selbsttätiger Längenausgleich der Betätigungszüge bzw. Seilzüge vorgenommen werden kann. Bei einer Betätigung der Betätigungszüge wird das Sperrstück selbsttätig von der entsperrenden Position in eine die Rastsegmente sperrende Position überführt, so daß die Bewegung des Betätigungselements, bspw. eines Handbremshebels o. dgl., über die Einstellvorrichtung auf die Betätigungszüge, bspw. zum Betätigen der Bremsbacken des Fahrzeuges übertragen werden kann.

Eine vorteilhafte Ausgestaltung der Erfindung, die sich insbesondere durch einen konstruktiv einfach Aufbau auszeichnet, besteht darin, daß die Rastsegmente mittels insbesondere durch Sicherungsringe gesicherter Bolzen in der Aufnahme gehalten sind.

Dabei hat es sich ebenfalls als vorteilhaft erwiesen, daß die in die Rastsegmente eingehängten Betätigungszüge mittels der Federelemente auf Zug beanspruchbar sind. Aufgrund dieser Maßnahme ist gewährleistet, daß jegliche Lose aus dem Betätigungszug durch eine entsprechende Schwenkbewegung der Rastsegmente herausgenommen wird.

Nach einer anderen vorteilhaften Weiterbildung der Erfindung weist das Federelement zwei Schenkel auf, wobei sich der eine Schenkel an der Aufnahme und der andere Schenkel an dem jeweiligen Rastsegment abstützt.

Eine vorteilhafte Weiterbildung der Erfindung besteht darin, daß das Sperrstück zwei die Rastsegmente hintergreifende, seitliche Abwinklungen mit jeweils einer Gegenzahnung aufweist, die jeweils einer Außenzahnung der Rastsegmente zugeordnet sind. Aufgrund dieser Maßnahme ist eine sichere und dauerhafte Sperrung der Rastsegmente bei einer Betätigung des Betätigungszuges gewährleistet.

Die Verbindung zwischen dem Betätigungselement und der Einstellvorrichtung wird von Vorteil dadurch hergestellt, daß eine Endarmatur eines Verbindungsstückes zwischen dem Betätigungselement und der Einstellvorrichtung mit einem bolzenförmigen Ende in eine Bohrung des Sperrstücks eingehängt ist.

Zur Gewährleistung der Verschiebbarkeit des Sperrstücks bei einer Betätigung des Betätigungszuges greift von Vorteil das bolzenförmige Ende der Endarmatur des Verbindungsstücks in ein Langloch der Aufnahme ein. Eine einwandfreie Führung des Sperrstücks in der Aufnahme ist dadurch gewährleistet, daß das Sperrstück zwischen Sicken, die insbesondere an den Innenwänden der Aufnahme vorgesehen sind, längsverschiebbar geführt ist.

Nach einem anderen vorteilhaften Merkmal der Erfindung ist der Aufnahme ein ortsfester bzw. fahrzeugseitig angeordneter Anschlag zugeordnet, der dafür sorgt, daß bei einer Nichtbetätigung des Betätigungselements das Sperrstück außer Eingriff mit den Rastsegmenten kommt, so daß die Rastsegmente etwaige Lose in dem Betätigungszug aufgrund der Federvorspannung ausgleichen können.

Die Montage der Einstellvorrichtung, bspw. in einem Fahrzeug wird dadurch vereinfacht, daß an äußeren Endabschnitten der Rastsegmente jeweils eine hakenartige Einhängung zur Aufnahme von an Enden der Seilzüge angeordneten Nippeln vorgesehen ist.

Von Vorteil sind die Seilzüge in Schlauchfassungen geführt, wobei die Schlauchfassungen an fahrzeugseitigen Aufnahmen abgestützt sind.

Als besonderes vorteilhafte, eigenständige Ausgestaltung der Erfindung weist die Einstellvorrichtung einen lösbaren Sperrstift auf, der insbesondere in ein Langloch der Aufnahme einsetzbar ist und das Sperrstück in einer die Rastsegmente sperrenden Position fixiert. Dieser Sperrstift ist im Anlieferungszustand der Einstellvorrichtung in das Langloch eingesetzt, wobei die Rastsegmente gegen die Federkraft in eine extreme Einschwenkposition eingeschwenkt sind und in dieser Position durch das Sperrstück gehalten werden. Hierdurch lassen sich die Nippel der Seilzüge bequem in die Einhängungen an den Rastsegmenten einhängen, wobei dann anschließend der Sperrstift aus der Einstellvorrichtung entfernt wird, so daß das Sperrstück in eine die Rastsegmente entsperrende Position gelangt.

Auch ist es erfindungsgemäß vorgesehen, daß durch Schrägstellung der Einstellvorrichtung im betätigten Zustand ein Kraftausgleich auf beide Seilstränge folgt.

Weitere Ziele, Vorteile, Merkmale und Anwendungsmöglichkeiten der vorliegenden Erfindung ergeben sich aus der nachfolgenden Beschreibung der in den Figuren dargestellten Ausführungsbeispiele. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine schematische Darstellung einer Handbremsanlage für ein Kraftfahrzeug,
- Figur 2: eine mögliche Ausführungsform einer erfindungsgemäßen Einstellvorrichtung mit Längenausgleich für Bremszüge,
- Figur 3: einen Querschnitt der Einstellvorrichtung gemäß Figur 2,
- Figur 4: einen Schnitt durch die Einstellvorrichtung gemäß Figur 3 längs der Schnittlinie A-A und
- Figuren 5 bis 7: unterschiedliche Arbeitsstellungen der Einstellvorrichung gemäß Figur 2.

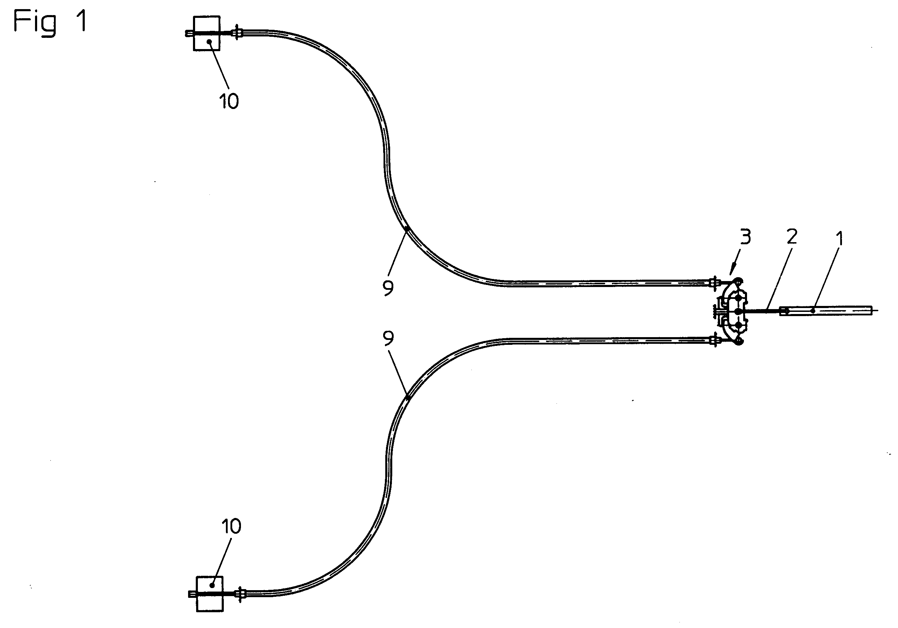

Die beispielhaft in Figur 1 dargestellte Handbremsanlage für ein Kraftfahrzeug weist einen im Fahrzeuginnenraum angeordneten schwenkbaren Handbremshebel 1 auf, welcher über ein Verbindungsstück 2, bspw. ein Gestänge oder ein Seilzug, mit der Einstellvorrichtung 3 verbunden ist. Die Einstellvorrichtung 3 kann entweder fahrzeuginnenseitig oder fahrzeugaußenseitig angeordnet sein, ebenso wie es denkbar ist, daß anstelle eines von Hand zu betätigenden Hebels eine mit dem Fuß einzustellende Feststellbremse vorgesehen ist.

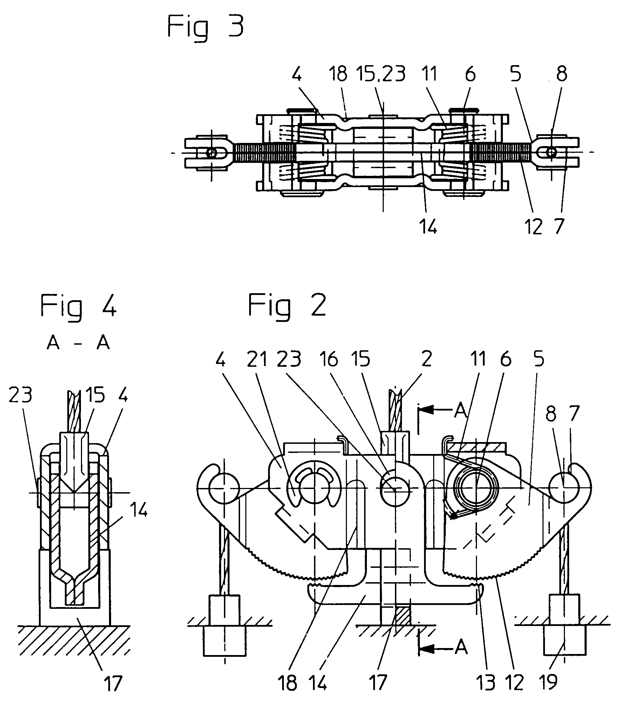

An der Einstellvorrichtung 3 mit Längenausgleich sind die Seilzüge 9 bzw. Bremszüge angelenkt, welche zu den Bremsen 10 an der Hinterachse des Fahrzeuges führen. Die Einstellvorrichtung 3 gemäß Figur 2 weist eine gehäuseartige Aufnahme 4 auf, an welcher zwei als Rastelemente ausgebildete Rastsegmente 5, Rasthebel o. dgl. verschwenkbar an Bolzen 6 gelagert sind. Die Rastsegmente 5 sind mittels Federelementen 11 in eine Drehrichtung vorgespannt, in welche die beiden Rastsegmente 5 jeweils nach außen in Richtung des Handbremshebels 1 bzw. in Fahrtrichtung verschwenkt sind. Hierfür stützt sich das eine Schenkelende des Federelementes 11 an der Aufnahme 4 ab, während das andere Schenkelende an dem zugeordneten Rastsegment 5 eingehängt ist. Mit dem Rastsegment 5 wirkt ein Sperrstück 14 zusammen, wobei die Rastsegmente 5 eine Zahnung 12 und das Sperrstück 14 eine zugeordnete Gegenzahnung 13 aufweisen.

An dem Sperrstück 14 ist am seinem dem Handbremshebel 1 zugewandten Ende das Verbindungsstück 2 bzw. das Drahtseil angelenkt, indem die Endarmatur 15 des Verbindungsstückes 2 bzw. des von dem Handbremshebel 1 abführenden Seiles T-förmig ausgebildet ist und, wie insbesondere aus Figur 4 zu ersehen, mit dem bolzenförmigen Ende 23 in eine Bohrung des Sperrstückes 14 eingehängt ist. An der Aufnahme 4 ist auf gegenüberliegenden Seiten jeweils ein Langloch 16 gebildet, in welche die bolzenförmigen Enden 23 der Endarmatur 15 eingreifen und für die Verschiebbarkeit in Längsrichtung des Sperrstückes 14 sorgen. Das Sperrstück 14 ist in seiner Längsrichtung an der Aufnahme 4 verschiebbar und gleichzeitig gegenüber dem Verbindungsstück 2 bzw. dem Seil verschwenkbar. Dabei bewirken Sicken 18 in der gehäuseförmigen Aufnahme 4 eine Führung des Sperrstückes 14.

Weiterhin ist, wie aus Figuren 2 und 4 zu ersehen, ein fahrzeugseitiger Anschlag 17 vorgesehen, welcher dazu dient, daß bei nicht betätigter Handbremse ein Anschlag für die Aufnahme 4 der Einstellvorrichtung 3 vorgesehen ist. Wenn die Aufnahme 4 gegen den Anschlag 17 gelangt, tritt das Sperrstück 14 mit seiner Gegenzahnung 13 außer Eingriff mit der Zahnung 12 der Rastsegmente 5.

An den äußeren Enden der Rastsegmente 5 ist eine hakenförmige Einhängung 7 zur Aufnahme der mit den Seilen der Bremszüge 9 verbundenen Nippeln 8 vorgesehen. Die Bremsseile 9 sind mit ihren Schlauchfassungen 19 an fahrzeugseitigen Aufnahmen 20 abgestützt.

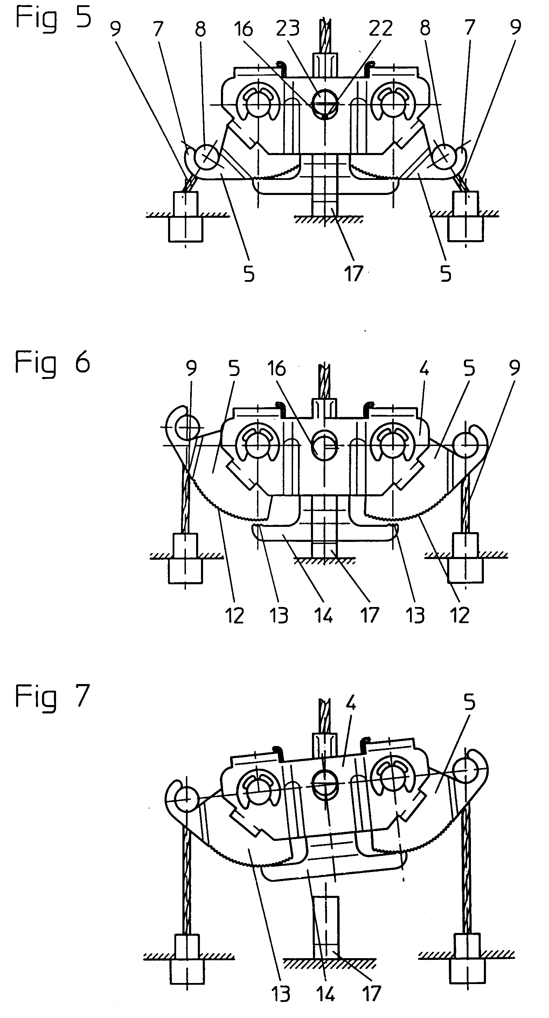

Die Funktion der erfindungsgemäßen Einstellvorrichtung 3 wird nachfolgend anhand der Figuren 5 bis 7 beschrieben.

Im Anlieferungszustand gemäß Figur 5 an das Band des Kraftfahrzeugherstellers ist in dem Langloch 16 zwischen den bolzenförmigen Enden 23 der Endarmatur 15 ein Sperrstift 22 eingesetzt, welcher die Rastsegmente 5 mit dem Sperrstück 14 in Eingriff bringt, derart, daß die Rastsegmente 5 gegen die Kraft der Federelemente 11 nach innen verschwenkt sind. Hierdurch lassen sich die Nippel 8 der Seilzüge 9 bequem in die Einhängungen 7 an den Rastsegmenten 5 einhängen. Im montierten Zustand wird der Sperrstift 22 entfernt und der Handbremshebel 1 in Öffnungsstellung übergeführt. Dabei gelangt die Aufnahme 4 gegen den Anschlag 17, wodurch das Sperrstück 14 mit seiner Gegenzahnung 13 außer Eingriff mit der Zahnung 12 der Rastsegmente 5 gelangt. Durch die Kraft der Federelemente 11 werden die Rastsegmente 5 in Richtung des Handbremshebels 1 bzw. in Fahrtrichtung nach außen verschwenkt. Hierdurch wird der Längenausgleich der Seilzüge 9 bewirkt (vgl. Figur 6).

Wird nun die Handbremse betätigt, gelangt das Sperrstück 14 in Eingriff mit den Rastsegmenten 5, wobei eine gleichmäßige Kraftübertragung auf beide Seilzüge 9 erfolgt.

Figur 7 berücksichtigt zusätzlich den Fall, daß die Bremsen 10 fertigungsbedingt oder auch durch Verschleiß unterschiedliche Bremswege aufweisen. Bei der Darstellung gemäß Figur 7 weist die rechte Bremse ein größeres Spiel als die linke Bremse auf, so daß zum Ausgleich dieses zusätzlichen Bremsspiels die Aufnahme 4 bzw. die Einstellvorrichtung im Gegenuhrzeigersinn etwas verschwenkt wird und es zu einer Schrägstellung der Einstellvorrichtung 3 kommt, bis der Bremsspielausgleich durchgeführt ist. Bei weiterem Anziehen der Handbremse kommt es dann zu einer gleichmäßigen Übertragung der Bremskraft über die Seilzüge 9 auf die Bremsen 10.

Die erfindungsgemäße Vorrichtung wirkt nicht nur im Sinne einer Ersteinstellung, sondern wie oben beschrieben, auch als permanente Nachstellung während des Betriebes des Fahrzeuges. Dabei ist die Einstellung, d.h. die Drehbewegung der Rastsegmente 5 reversibel, was sich als besonderer Vorteil im Hinblick auf ein Festfrieren der Bremsbacken der Bremsen 10 auswirkt. Wenn nämlich im Winter bei gezogener Handbremse die Bremsbacken festgefroren sind, und nachfolgend der Handbremshebel 1 in Öffnungsstellung abgesenkt wird, kommt es zwar anfänglich zu einem Nachstellen der Seilzüge 9, indem die dabei auftretende fiktive Lose aus dem System herausgenommen wird. Wenn nun die Bremse 10 auftaut, bewirken die Rückstellfedern in den Bremsen 10, daß die Rastsegmente 5 wieder zurückgestellt werden, da die Bremse sich in Öffnungsstellung befindet und demgemäß das Sperrstück 14 nicht in Eingriff mit den Rastsegmenten 5 steht. Das Sperrstück 14 und die Rastsegmente 5 kommen erst dann wieder in Eingriff, wenn nach dem Auftauen der Handbremshebel 1 wieder angezogen wird. Diese reversible Nachstellung der erfindungsgemäßen Vorrichtung ist ein wesentlicher Vorteil gegenüber den bekannten Nachstelleinrichtungen, welche nur in einer Richtung, nämlich in Richtung einer Nachstellung wirken, und gegen eine Umkehr der Nachstellwirkung blockiert sind.

### Bezugszeichenliste

- 1: - Handbremshebel
- 2: - Verbindungsstück
- 3: - Einstellvorrichtung mit Ausgleich
- 4: - Aufnahme
- 5: - Rastsegmente
- 6: - Bolzen
- 7: - Einhängungen zur Aufnahme von Nippeln
- 8: - Nippel
- 9: - Seilzüge
- 10: - Bremsbacken
- 11: - Federelement (Drehfeder)
- 12: - Außenzahnung
- 13: - Gegenzahnung
- 14: - Sperrstück
- 15: - Endarmatur
- 16: - Langloch
- 17: - Anschlag
- 18: - Sicken
- 19: - Schlauchfassungen
- 20: - Aufnahme, fahrzeugseitig
- 21: - Sicherungsring
- 22: - Sperrstift
- 23: - bolzenförmiges Ende (von 15)
- 24: - Abwinklung

## Patentansprüche

1. Einstellvorrichtung (3) mit selbsttätigem Längenausgleich für einen Betätigungszug, insbesondere für einen Seilzug (9) zur Betätigung von Bremsbacken (10) eines Fahrzeuges mittels eines Betätigungselements, wie einem Handbremshebel (1), eine Fußfeststellbremse o. dgl., dadurch gekennzeichnet, daß die Einstellvorrichtung (3) eine gehäuseartige Aufnahme (4) mit zwei schwenkbar gelagerten, durch Federelemente (11) vorgespannten Rastelementen (5), aufweist, die jeweils mit einem Betätigungszug, insbesondere Seilzug (9) verbindbar sind, und mit einem in der Aufnahme (4) verschiebbar geführten Sperrstück (14), welches bei einer Betätigung eines Betätigungszuges bzw. Seilzuges (9) von einer die Rastsegmente (5) entsperrenden Position in eine die Rastsegmente (5) sperrende Position überführbar ist.

2. Einstellvorrichtung nach Anspruch 1, dadurch gekennzeichnet, daß die Rastsegmente (5) mittels insbesondere durch Sicherungsringe (21) gesicherte Bolzen (6) in der Aufnahme (4) gehalten sind.

3. Einstellvorrichtung nach einem der vorhergehenden Ansprüche, dadurch gekennzeichnet, daß die in die Rastsegmente (5) eingehängten Betätigungszüge (9) mittels der Federelemente (11) auf Zug beanspruchbar sind.

4. Einstellvorrichtung nach einem der vorhergehenden Ansprüche, dadurch gekennzeichnet, daß das Federelement (11) zwei Schenkel aufweist, wobei sich der eine Schenkel an der Aufnahme (4) und der andere Schenkel an dem jeweiligen Rastsegment (5) abstützt.

5. Einstellvorrichtung nach einem der vorhergehenden Ansprüche, dadurch gekennzeichnet, daß das Sperrstück (14) zwei die Rastsegmente (5) hintergreifende, seitliche Abwinklungen (24) mit jeweils einer Gegenzahnung (13) aufweist, die jeweils einer Außenzahnung (12) der Rastsegmente (5) zugeordnet sind.

6. Einstellvorrichtung nach einem der vorhergehenden Ansprüche, dadurch gekennzeichnet, daß eine Endarmatur (15) eines Verbindungsstücks (2) zwischen dem Betätigungselement und der Einstellvorrichtung (3) mit einem bolzenförmigen Ende (23) in eine Bohrung des Sperrstücks (14) eingehängt ist.

7. Einstellvorrichtung nach einem der vorhergehenden Ansprüche, dadurch gekennzeichnet, daß ein bolzenförmiges Ende (23) einer Endarmatur (15) eines Verbindungsstücks (2) in ein Langloch (16) der Aufnahme (4) längsverschiebbar eingreift.

8. Einstellvorrichtung nach einem der vorhergehenden Ansprüche, dadurch gekennzeichnet, daß das Sperrstück (14) zwischen Sicken (18) an den Innenwänden der Aufnahme (4) längsverschiebbar geführt ist.

9. Einstellvorrichtung nach einem der vorhergehenden Ansprüche, dadurch gekennzeichnet, daß der Aufnahme (4) ein fahrzeugseitig angeordneter Anschlag (17) zugeordnet ist, welcher dazu ausgebildet ist, daß bei Nichtbetätigung des Betätigungselementes (1) das Sperrstück (14) außer Eingriff mit den Rastsegmenten (5) gelangt.

10. Einstellvorrichtung nach einem der vorhergehenden Ansprüche, dadurch gekennzeichnet, daß an äußeren Endabschnitten der Rastsegmente (5) jeweils eine hakenartige Einhängung (7) zur Aufnahme von an Enden der Seilzüge (9) angeordneten Nippeln (8) vorgesehen ist.

11. Einstellvorrichtung nach einem der vorhergehenden Ansprüche, dadurch gekennzeichnet, daß die Seilzüge (9) in den Schlauchfassungen (19) geführt und die Schlauchfassungen (19) an fahrzeugseitigen Aufnahmen (20) abgestützt sind.

12. Einstellvorrichtung nach einem der vorhergehenden Ansprüche, dadurch gekennzeichnet, daß die Einstellvorrichtung einen lösbaren Sperrstift (22) aufweist, der insbesondere in ein Langloch (16) der Aufnahme (4) einsetzbar ist und das Sperrstück (14) in einer die Rastsegmente (5) sperrenden Position fixiert.

13. Einstellvorrichtung nach einem der vorhergehenden Ansprüche, dadurch gekennzeichnet, daß die Einstellvorrichtung (3) für eine Schrägstellung ausgebildet ist, um im betätigten Zustand ein Kraftausgleich auf beide Seilstränge (9) auszuüben.

## Claims

1. Adjusting device (3) with automatic length compensation for an actuating pull, in particular for a cable pull (9) for actuation of brake shoes (10) of a vehicle by means of an actuating element, such as a hand brake lever (1), a foot parking brake or the like, characterised in that the adjusting device (3) comprises a housing-like receptacle (4) with two detent elements (5), which are borne to be pivotable, are biased by spring elements (11) and which are each connectable with a respective actuating pull, in particular cable pull (9), and with a blocking member (14), which is guided in the receptacle (4) to be displaceable and which on an actuation of an actuating pull or cable pull (9) is transferrable from a position releasing the detent segments (5) into a position blocking the detent segments (5).

2. Adjusting device according to claim 1, characterised in that the detent segments (5) are retained in the receptacle (4) by means of pins (6) secured in particular by securing rings (21).

3. Adjusting device according to one of the preceding claims, characterised in that the actuating pulls (9) hooked into the detent segments (5) are loadable in tension by means of the spring elements (11).

4. Adjusting device according to one of the preceding claims, characterised in that the spring element (11) has two limbs, wherein the one limb bears against the receptacle (4) and the other limb bears against the respective detent segment (5).

5. Adjusting device according to one of the preceding claims, characterised in that the blocking member (14) comprises two lateral bent-over portions (24) engaging behind the detent segments (5) and with a respective countertoothing (13), which is associated with a respective external toothing (12) of the detent segments (5).

6. Adjusting device according to one of the preceding claims, characterised in that an end fitting (15) of a connecting member (2) between the actuating element and the adjusting device (3) is hooked by a pin-shaped end (23) into a bore of the blocking member (14).

7. Adjusting device according to one of the preceding claims, characterised in that a pin-shaped end (23) of an end fitting (15) of a connecting member (2) engages into an elongate hole (16) of the receptacle (4) to be longitudinally displaceable.

8. Adjusting device according to one of the preceding claims, characterised in that the blocking member (14) is guided between corrugations (18) at the inner walls of the receptacle (4) to be longitudinally displaceable.

9. Adjusting device according to one of the preceding claims, characterised in that the receptacle (4) is associated with an abutment (17), which is arranged at the vehicle side and which is constructed for the purpose that the blocking member (14) on non-actuation of the actuating element (1) comes out of engagement with the detent segments (5).

10. Adjusting device according to one of the preceding claims, characterised in that a respective hook-like suspension (7) for the reception of nipples (8) arranged at ends of the cable pulls (9) is provided at each of the outer end portions of the detent segments (5).

11. Adjusting device according to one of the preceding claims, characterised in that the cable pulls (9) are guided in the hose mountings (19) and the hose mountings (19) are supported at receptacles (20) at the vehicle side.

12. Adjusting device according to one of the preceding claims, characterised in that the adjusting device comprises a detachable blocking pin (22), which is insertable in particular into an elongate hole (16) of the receptacle (4) and fixes the blocking member (14) in a position blocking the detent segments (5).

13. Adjusting device according to one of the preceding claims, characterised in that the adjusting device (3) is constructed for an oblique setting in order in the actuated state to exert a force equalisation over both cable strands (9).

## Revendications

1. Dispositif de réglage (3) comportant un système de compensation automatique de longueur pour un câble d'actionnement, notamment pour un câble de traction (9) servant à actionner des mâchoires de frein (10) d'un véhicule, à l'aide d'un élément d'actionnement, comme par exemple un levier de frein à main (1), un frein de parcage actionné avec le pied ou analogue, caractérisé en ce que le dispositif de réglage (3) comporte un logement en forme de boîtier (4) possédant deux éléments d'encliquetage (5) qui sont montés de manière à pouvoir pivoter, sont précontraints par des éléments de ressorts (11) et peuvent être reliés chacun à un câble d'actionnement, notamment un câble de traction (9), et un organe de blocage (14), qui est guidé avec possibilité de déplacement dans le logement (4) et qui, lors d'un actionnement d'un organe d'actionnement ou d'un câble de traction (9), peut être amené d'une position de déblocage des segments d'encliquetage (5), dans une position de blocage des segments d'encliquetage (5).

2. Dispositif de réglage selon la revendication 1, caractérisé en ce que les segments d'encliquetage (5) sont retenus dans le logement (4) à l'aide de goujons (6) bloqués notamment par des bagues de sécurité (21).

3. Dispositif de réglage selon l'une des revendications précédentes, caractérisé en ce que les câbles d'actionnement (9) accrochés dans les segments d'encliquetage (5) sont sollicités en traction à l'aide des éléments de ressorts (11).

4. Dispositif de réglage selon l'une des revendications précédentes, caractérisé en ce que l'élément de ressort (11) comporte deux branches, dont l'une prend appui sur le logement (4) tandis que l'autre branche prend appui sur le segment d'encliquetage respectif (5).

5. Dispositif de réglage selon l'une des revendications précédentes, caractérisé en ce que l'organe de blocage (14) comporte deux parties coudées latérales (24), qui s'engagent derrière les segments d'encliquetage (5) et comportent des dentures antagonistes respectives (13), qui sont associées à des dentures extérieures respectives (12) des segments d'encliquetage (5).

6. Dispositif de réglage selon l'une des revendications précédentes, caractérisé en ce qu'une armature d'extrémité (15) d'une pièce de liaison (2) est accrochée entre l'élément d'actionnement et le dispositif de réglage (3) au moyen d'une extrémité en forme de goujon (23) dans un perçage de l'organe de blocage (14).

7. Dispositif de réglage selon l'une des revendications précédentes, caractérisé en ce qu'une extrémité en forme de goujon (23) d'une armature d'extrémité (15) d'une pièce de liaison (2) s'engage avec la possibilité de déplacement longitudinal dans un trou allongé (16) du logement (4).

8. Dispositif de réglage selon l'une des revendications précédentes, caractérisé en ce que l'organe de blocage (14) est guidé avec possibilité de déplacement longitudinal entre des moulures (18) contre les parois intérieures du logement (4).

9. Dispositif de réglage selon l'une des revendications précédentes, caractérisé en ce qu'au logement (4) est associée une butée (17) disposée sur le véhicule et qui est agencée de telle sorte que, en cas de non actionnement de l'élément d'actionnement (1), l'organe de blocage (14) se dégage des segments d'encliquetage (5).

10. Dispositif de réglage selon l'une des revendications précédentes, caractérisé en ce que sur des sections d'extrémité extérieures des segments d'encliquetage (5) est prévu un élément respectif d'accrochage en forme de crochets (7) servant à recevoir des raccords filetés (8) situés sur les extrémités des câbles de traction (9).

11. Dispositif de réglage selon l'une des revendications précédentes, caractérisé en ce que les câbles de traction (9) sont guidés dans les gaines formant tuyaux (19) et que les gaines formant tuyaux (19) prennent appui sur les logements (20) présents dans le véhicule.

12. Dispositif de réglage selon l'une des revendications précédentes, caractérisé en ce que le dispositif de réglage possède une tige de blocage amovible (22), qui peut être insérée notamment dans un trou allongé (16) du logement (4) et fixe l'organe de blocage (14) dans une position de blocage des segments d'encliquetage (5).

13. Dispositif de réglage selon l'une des revendications précédentes, caractérisé en ce que le dispositif de réglage (3) est conçu pour une position oblique de manière à réaliser, à l'état actionné, une compensation de force sur les deux brins (9) du câble.
